# EUROPÄISCHE PATENTSCHRIFT

(11) **EP 4 269 948 B1**
(45) Veröffentlichungstag und Bekanntmachung des Hinweises auf die Patenterteilung: **11.12.2024**
(21) Anmeldenummer: 23166480.6
(22) Anmeldetag: 04.04.2023
(51) Int. Cl.: G01C 21/36, G02B 27/01, G06F 3/01

(54) **ANWENDERSCHNITTSTELLE, FORTBEWEGUNGSMITTEL UND VERFAHREN ZUR ANZEIGE EINER VIRTUELLEN DREIDIMENSIONALEN NAVIGATIONSKARTE**
USER INTERFACE, MEANS OF LOCOMOTION AND METHOD FOR DISPLAYING A VIRTUAL THREE-DIMENSIONAL NAVIGATION MAP
INTERFACE UTILISATEUR, MOYEN DE DÉPLACEMENT ET PROCÉDÉ D'AFFICHAGE D'UNE CARTE DE NAVIGATION TRIDIMENSIONNELLE VIRTUELLE

(30) Priorität: 11.04.2022 DE 102022108773
(43) Veröffentlichungstag der Anmeldung: 01.11.2023
(73) Patentinhaber: VOLKSWAGEN AG, 38440 Wolfsburg (DE)
(72) Erfinder: KLEEN, Andro, 38124 Braunschweig (DE); WILKENS, Kathrin, 38442 Wolfsburg (DE); WITTKÄMPER, Michael, 38106 Braunschweig (DE); RAUTENBERG, Ulrich, 30175 Hannover (DE); GURKA, Daniel, 30163 Hannover (DE); KONRAD, Jonas, 38112 Braunschweig (DE); HAAR, Adrian, 30173 Hannover (DE)
(74) Vertreter: Hoefer & Partner Patentanwälte mbB

(56) Entgegenhaltungen:
- WO-A1-2016/014878
- DE-A1- 102013 210 746

## Beschreibung

Die vorliegende Erfindung betrifft ein Fortbewegungsmittel, eine Anwenderschnittstelle sowie ein Verfahren zur Anzeige einer virtuellen dreidimensionalen Navigationskarte in einem Fortbewegungsmittel. Insbesondere betrifft die vorliegende Erfindung eine besonders intuitiv verständliche Darstellung eines Navigationsvorhabens und einer intuitiv verständlichen Führung eines Anwenders auf einer Route.

Navigationssysteme in Fortbewegungsmitteln verwenden üblicherweise fest im Kombiinstrument, in einem zentralen Informationsdisplay und/oder in einem Head-up-Display verortete Anzeigeelemente. Mitunter stellt die Darstellung den (unerfahrenen) Anwender vor Interpretationsschwierigkeiten, da die Details vergleichsweise klein und gegenüber der Realität gedreht dargestellt werden. Dies liegt insbesondere daran, dass die in Fortbewegungsmitteln verbauten Anzeigeeinrichtungen üblicherweise eine eher vertikale als horizontale Ausrichtung haben, während die Straßenkarte natürlicherweise horizontal orientiert am besten zu verstehen wäre.

Darüber hinaus sind Augmented-Reality-Anzeigen bekannt, mittels welcher Anwendern künstliche/virtuelle Inhalte in vordefiniertem Bezug zur durchscheinenden Realität angezeigt werden können. Hierzu ist es erforderlich, dass die Augmented-Reality-Brille/-Anzeige die Umgebung kennenlernt, bzw. einen Bezug zwischen den Anzeigeinhalten und der Realität hergestellt wird. Nur dann können die Anzeigeelemente quasi kontaktanalog bezüglich der Umgebung angezeigt und zur Verbesserung der Informationslage des Anwenders verwendet werden.

Aus WO 2016/014878 A1 ist das Darstellen eines 3D-Objektes auf der Oberfläche einer Umgebung mittels augmentierter Realität bekannt.

DE 10 2013 210746 A1 offenbart das Anzeigen einer virtuellen Navigationskarte auf einer Oberfläche eines Innenraumes eines Fortbewegungsmittels mittels einer Augmented-Reality-Anzeigeeinrichtung.

Ausgehend vom vorgenannten Stand der Technik ist es eine Aufgabe der vorliegenden Erfindung, einen Anwender bei einem Navigationsvorhaben bestmöglich zu unterstützen.

### Offenbarung der Erfindung

Die vorstehend genannte Aufgabe wird erfindungsgemäß durch ein Verfahren zur Anzeige einer virtuellen dreidimensionalen Navigationskarte in einem Fortbewegungsmittel gelöst. Die dreidimensionale Navigationskarte kann als Datenmodell in einem Datenspeicher des Fortbewegungsmittels vorliegen oder nach und nach in das Fortbewegungsmittel gestreamt werden. Alternativ oder zusätzlich kann die dreidimensionale Navigationskarte auch in einem lokalen Datenspeicher einer Augmented-Reality (nachfolgend auch "AR")-Anzeigeeinrichtung abgespeichert sein. Die Augmented-Reality-Anzeigeeinrichtung befindet sich im Fortbewegungsmittel und kann im Stande sein, eine Oberfläche des Innenraums des Fortbewegungsmittels, insbesondere ein Armaturenbrett des Fortbewegungsmittels, optisch abzutasten oder einen die Oberfläche repräsentierenden Datensatz zu speichern. Dieser Vorgang kann auch als Kalibrierung der Augmented-Reality-Anzeigeeinrichtung auf die Innenraumoberfläche des Fortbewegungsmittels verstanden werden. Hierbei wird der Augmented-Reality-Anzeigeeinrichtung eine räumliche Beziehung zwischen den Oberflächen des Innenraums des Fortbewegungsmittels und der Position der Augmented-Reality-Anzeigeeinrichtung zur Kenntnis gebracht oder derart hergestellt, dass die Augmented-Reality-Anzeigeeinrichtung die eigene Position sowie die Position der jeweiligen Oberflächenbereiche des Innenraums erlernt. Hierbei wird der Augmented-Reality-Anzeigeeinrichtung sozusagen beigebracht, bestimmte Umgebungsbereiche der Oberfläche des Innenraumes des Fortbewegungsmittels zuzuordnen, während andere Bereiche (z. B. Fensterflächen) einem außerhalb des Fortbewegungsmittels gelegenen Inertialsystem zugeordnet werden. Zudem wird eine dreidimensionale Navigationskarte aus einem Datenspeicher geladen. Dieser Datenspeicher kann innerhalb des Fortbewegungsmittels, insbesondere innerhalb der Augmented-Reality-Anzeigeeinrichtung und/oder außerhalb des Fortbewegungsmittels vorgesehen sein. Insbesondere für außerhalb des Fortbewegungsmittels befindliche Datenspeicher kann eine informationstechnische Anbindung Over-the-Air (via WiFi, WLAN, LTE, LTE-A etc.) vorgesehen sein.

Aufgrund der optischen Abtastung bzw. Kalibrierung ist die Gestalt/Form der Oberfläche des Innenraums des Fortbewegungsmittels bekannt. Nun kann die dreidimensionale Navigationskarte bzw. das 3D-Kartenmodell an die Oberfläche des Fortbewegungsmittels angepasst werden. Mit anderen Worten kann die Navigationskarte also vollflächig an einer auch gewölbt ausgestalteten Oberfläche eines Innenraums des Fortbewegungsmittels "virtuell" anhaften, während die dreidimensionale Navigationskarte üblicherweise in der Ebene (z. B. Bildschirmebene o. ä.) definiert ist und angezeigt wird. Anschließend wird die angepasste dreidimensionale Navigationskarte nebst einer Repräsentation einer Ego-Position des Fortbewegungsmittels als virtuelles, erhabenes Modell auf der Oberfläche mittels der Augmented-Reality-Anzeigeeinrichtung dargestellt. Hierbei wird wie bei bekannten Navigationsdarstellungen üblich entweder die Ego-Position des Fortbewegungsmittels durch die Straßen geführt oder die Ego-Position des Fortbewegungsmittels festgehalten, während die angepasste dreidimensionale Navigationskarte entsprechend der Bewegung des realen Fortbewegungsmittels verschoben wird. Diese Darstellungsform hat mehrere Vorteile: Einerseits kann eine besonders große Darstellung der Navigationskarte auf dem Armaturenbrett erfolgen, da hier vergleichsweise viel Platz ist und die Größe im Fortbewegungsmittel befindlicher Bildschirme keinen limitierenden Faktor mehr darstellen. Andererseits ist die im Wesentlichen horizontale Ausrichtung der überwiegenden Bereiche des Armaturenbrettes dafür geeignet, eine besonders intuitiv verständliche Darstellung der Straßenkarte zu erzeugen, da der Betrachter keine perspektivische Anpassung/Interpretation vorzunehmen braucht. Zudem kann über die Augmented-Reality-Anzeigeeinrichtung eine besonders intuitiv verständliche 3D-Gestalt der Straßenkarte vorgenommen werden, sodass der Betrachter eine realitätsgetreue und perspektivisch realitätsnahe Anzeige der Umgebung des Ego-Fortbewegungsmittels erhält.

Die Unteransprüche zeigen bevorzugte Weiterbildungen der Erfindung.

Wie oben bereits angesprochen, kann in einem vorausgehenden Schritt die Oberfläche im Innenraum des Fortbewegungsmittels optisch abgetastet werden. Dieser Schritt kann auch als Scannen bzw. Vermessen/Lokalisieren der Oberfläche des Innenraums verstanden werden. Er kann im jeweiligen Fahrzeug (automatisch) erfolgen, beispielsweise nach einem ersten Pairing einer Augmented-Reality-Anzeigeeinrichtung mit dem Fortbewegungsmittel. Alternativ oder zusätzlich kann dieser Schritt werksseitig durchgeführt worden sein, um ein initiales Modell für die Oberfläche bereitzustellen. Dieses Modell kann beispielsweise in der Augmented-Reality-Anzeigeeinrichtung hinterlegt, ihr vom Fortbewegungsmittel übermittelt oder von einem Server herunterladbar bereitgehalten werden. Der Scanvorgang kann beispielsweise auch durch ein vom Anwender mitgeführtes Smartphone durchgeführt werden. Der Schritt des Scannens kann bei jeder Inbetriebnahme des Fortbewegungsmittels und/oder der Augmented-Reality-Anzeigeeinrichtung ausgeführt werden, um zwischenzeitlich ggf. vorgenommenen Änderungen in Funktion, Geometrie und Farbe der Oberfläche entsprechen zu können.

Die optische Abtastung der Oberfläche des Innenraums des Fortbewegungsmittels kann insbesondere mittels eines optischen Sensors der Anzeigeeinrichtung erfolgen. Mit anderen Worten weist die Augmented-Reality-Anzeigeeinrichtung einen optischen Sensor auf, welcher in einem Gehäuse der AR-Anzeigeeinrichtung angeordnet ist. Auf diese Weise ist auch stets ein fester Bezug zwischen der Ausrichtung des optischen Sensors und der Anzeigefläche gewahrt.

So kann beim erstmaligen Verwenden der AR-Anzeigeeinrichtung in dem Fortbewegungsmittel ein Handshake bzw. Kalibriervorgang gestartet werden, um die Oberflächen des Fortbewegungsmittels bzw. seines Innenraums kennenzulernen und eine Art "Leinwand" für die spätere Darstellung der angepassten dreidimensionalen Navigationskarte zu erstellen. Der optische Sensor kann beispielsweise eine Kamera sein, welche in einer AR-Brille in zur Blickrichtung des Anwenders ähnlicher Richtung orientiert ist. Somit kann mittels des optischen Sensors stets derjenige Bereich optisch erfasst werden, welchen der Anwender während der Verwendung erblickt. Somit können auch Gegenstände im Blickfeld des Anwenders erkannt und/oder Körperteile des Anwenders als Eingabemittel identifiziert und/oder optisch hervorgehoben werden.

Die AR-Anzeigeeinrichtung kann insbesondere einen transparenten Bildschirm aufweisen, welcher beispielsweise als am Kopf befestigter Monitor in Form einer Pixelanzeige ausgestaltet sein kann. Alternativ oder zusätzlich kann die Anzeigeeinrichtung auch ein Smartphone, ein Tablet o. ä. aufweisen, dessen Kamera Daten zur Abbildung des realen Hintergrunds auf dem Bildschirm liefert, während der Prozessor das Kamerabild um zusätzliche Anzeigeinhalte bzw. die angepasste dreidimensionale Navigationskarte, erweitert (augmentiert).

Die dreidimensionale Navigationskarte kann beispielsweise aus einem Datenspeicher des Fortbewegungsmittels geladen werden. Insbesondere kann das Fortbewegungsmittel eingerichtet sein, das Navigationsvorhaben durch Sensoren des Fortbewegungsmittels (insbesondere Raddrehzahlsensoren, GPS-Antenne(n) o. ä.) zu unterstützen. Die erforderlichen Ausschnitte der dreidimensionalen Navigationskarte können entsprechend durch das Fortbewegungsmittel der Augmented-Reality-Anzeigeeinrichtung zur Verfügung gestellt werden. Alternativ oder zusätzlich kann auch ein in der Augmented-Reality-Anzeigeeinrichtung befindliches Navigationssystem verwendet werden, welches Kartendaten aus dem Fortbewegungsmittel oder einem anderen Datenspeicher bezieht und die eigenen Sensoren für die Ermittlung von Position und Fortschritt verwendet. Dies hat den Vorteil, dass auch nach einem Aussteigen aus dem Fortbewegungsmittel das Navigationsvorhaben fortgesetzt werden kann, ohne Raddrehzahlsensoren oder eine erfindungsgemäße Projektion auf ein Armaturenbrett vornehmen zu können.

In einem ersten Schritt kann die AR-Anzeigeeinrichtung mit dem Fortbewegungsmittel informationstechnisch verknüpft werden. Hierzu kann ein Kabel (insbesondere USB- oder Monitorkabel) und/oder eine Antenne zur Übertragung drahtloser Informationssignale (insbesondere via Bluetooth, WiFi, WLAN o. ä.) verwendet werden. Nach der informationstechnischen Verknüpfung kann das Fortbewegungsmittel mit der AR-Anzeigeeinrichtung kommunizieren und anders herum.

Insbesondere können Sensorinformationen, Kartendaten und Informationen über den jeweiligen Betriebszustand ausgetauscht werden, um erforderlichenfalls darauf reagieren zu können. Beispielsweise kann eine Veränderung einer optischen Erscheinung des Fortbewegungsmittels im Bereich der für die Darstellung der angepassten dreidimensionalen Navigationskarte verwendeten Oberfläche durch anderweitige Umstände ermittelt werden. Beispielsweise kann ein Anzeigeelement des Fortbewegungsmittels, insbesondere ein Scheibenwurzeldisplay oder eine in dem Armaturenbrett befindliche Anzeigeeinrichtung in Betrieb genommen oder mit einer anderen Intensität und/oder mit einem anderen Inhalt betrieben werden. Um zu verhindern, dass die modifizierte optische Erscheinung die optische Darstellung der angepassten dreidimensionalen Navigationskarte kompromittiert bzw. mit dieser interferiert, kann die angepasste dreidimensionale Navigationskarte und/oder ihre Darstellung mittels der AR-Anzeigeeinrichtung angepasst werden. Beispielsweise können Inhalte an eine andere Position auf der Oberfläche des Fortbewegungsmittelinnenraums verschoben werden. Alternativ oder zusätzlich kann eine Intensität und/oder eine Farbe eines dargestellten Elementes der angepassten dreidimensionalen Navigationskarte verändert werden, um sich gegenüber der modifizierten optischen Erscheinung des Fortbewegungsmittels durchzusetzen oder selbige nicht zu stören. Zur Ermittlung der modifizierten optischen Erscheinung kann das Fortbewegungsmittel, welches naturgemäß als erstes Kenntnis darüber erlangt, welche Veränderungen sich bezüglich seiner Signalisierungseinrichtungen ergeben, eine Drahtlosnachricht an die AR-Anzeigeeinrichtung senden. Alternativ oder zusätzlich kann die AR-Anzeigeeinrichtung mittels eines eigenen optischen Sensors die modifizierte optische Erscheinung des Fortbewegungsmittels im Bereich der Oberfläche ermitteln und unabhängig von einer Kommunikation mit dem Fortbewegungsmittel eine geeignete Anpassung der Darstellung der angepassten dreidimensionalen Navigationskarte vornehmen. Dies ermöglicht eine besonders unproblematische Koexistenz von Anzeigeeinrichtung des Fortbewegungsmittels und der angepassten dreidimensionalen Navigationskarte.

Besonders intuitiv kann ein Navigationsvorhaben dadurch unterstützt werden, dass ein bevorstehendes Manöver des Fortbewegungsmittels automatisch ermittelt wird. Derartige Ereignisse werden im Stand der Technik üblicherweise durch Detaildarstellungen und/oder die Ausgabe akustischer Anweisungen an den Fahrer unterstützt. In erfindungsgemäßer Weise wird im Ansprechen darauf jedoch (insbesondere zusätzlich) die Repräsentation der Ego-Position des Fortbewegungsmittels aus der angepassten dreidimensionalen Navigationskarte herausgelöst. Hierbei wird beispielsweise ein zunächst mit der Repräsentation der Ego-Position zusammenfallender Cursor oder Hinweis optisch nach oben abgehoben und aus der im Fortbewegungsmittel verorteten angepassten dreidimensionalen Navigationskarte in die Fahrzeugumgebung überführt. Mit anderen Worten steigt die Ego-Position oder ein zunächst mit ihr korrelierender Pointer von der Oberfläche empor und verortet sich kontaktanalog mit derjenigen Position der realen Fahrzeugumgebung, an welcher das Manöver auszuführen ist. Dies kann beispielsweise bedeuten, dass vom Armaturenbrett des Fortbewegungsmittels eine Repräsentation der Ego-Position zunächst in vertikaler (Z-Richtung) aufsteigender Cursor mit der Windschutzscheibe überlappend an einer solchen Position mittels der AR-Anzeigeeinrichtung dargestellt wird, welche mit einer Kreuzung, an welcher das Fortbewegungsmittel abbiegen muss, optisch korrespondiert. Hierbei kann die Repräsentation bzw. das aus der angepassten dreidimensionalen Navigationskarte emporsteigende Element eine Formveränderung und/oder eine Farbveränderung und/oder eine Intensitätsveränderung erfahren, um dem Anwender zu verdeutlichen, dass nun streng genommen nicht mehr die Ego-Position, sondern eine zukünftige Soll-Ego-Position bzw. ein Richtungspfeil o. ä. repräsentiert wird. Durch den Übergang zwischen der Verortung der Repräsentation der Ego-Position in der angepassten dreidimensionalen Navigationskarte in ein virtuelles kontaktanaloges Bewegungselement werden der Blick und die Aufmerksamkeit des Anwenders besonders intuitiv geführt und das Navigationsvorhaben verständlicher als im Stand der Technik gestaltet.

Sobald das Fortbewegungsmittel, insbesondere in einer Kreuzungssituation, eine Fahrtrichtungsänderung durchführt, kann die Darstellung der dreidimensionalen Navigationskarte entsprechend automatisch angepasst werden, so dass für den Betrachter eine Drehbewegung der Navigationskarte auf der Oberfläche, insbesondere parallel zur äußeren Umgebung, erfolgt. Dies kann insbesondere von der vorausgewählten Einstellung "Karte Fahrtrichtungsweisend" abhängen. Optional kann diese Drehung auch mit einem zeitlichen Versatz erfolgen, so dass der Fahrer während eines Fahrtmanövers nicht von der Drehung abgelenkt wird.

Gemäß einem zusätzlichen Aspekt kann der Anwender mit den Elementen der angepassten dreidimensionalen Navigationskarte interagieren. Beispielsweise kann der Anwender auf ein Gebäude bzw. auf dessen Repräsentation tippen, um das Gebäude betreffende Informationen mittels der Augmented-Reality-Anzeigeeinrichtung angezeigt zu bekommen. Beispielsweise können die Informationen auf der Oberfläche der 3D-Repräsentation des jeweiligen Gebäudes dargestellt werden und/oder über ein oberhalb des Gebäudes oder dessen Repräsentation schwebendes Textfeld veranschaulicht werden.

Sofern sich das vom Anwender angewählte Gebäude bereits im Blickfeld des Anwenders befindet, können die Informationen mittels der AR-Anzeigeeinrichtung auch alternativ oder zusätzlich dem realen Gebäude in der Umgebung zugeordnet werden. Die Anwahl des den Anwender interessierenden Gebäudes erfolgt somit innerhalb der angepassten dreidimensionalen Navigationskarte und wird insbesondere mittels des optischen Sensors der AR-Anzeigeeinrichtung ermittelt, während die Darstellung der Informationen wahlfrei in der 3D-Repräsentation des Gebäudes und/oder kontaktanalog auf der (realen) Umgebung des Fortbewegungsmittels angezeigt werden.

Gemäß einem zweiten Aspekt der vorliegenden Erfindung wird eine Anwenderschnittstelle zur Anzeige einer virtuellen dreidimensionalen Navigationskarte in einem Fortbewegungsmittel vorgeschlagen. Die Anwenderschnittstelle umfasst einen Dateneingang, eine Auswerteeinheit und einen Datenausgang. Die vorgenannten Elemente können beispielsweise als Bestandteile eines elektronischen Steuergerätes ausgestaltet sein, welches exklusiv für die Realisierung der vorliegenden Erfindung im Fortbewegungsmittel vorgesehen oder als mit anderen Funktionen geteilte Hardware vorgesehen sein kann. Die Anwenderschnittstelle ist eingerichtet mittels des Dateneingangs (und eines optischen Sensors) eine Oberfläche eines Innenraumes des Fortbewegungsmittels optisch abzutasten oder eine datentechnische Repräsentation derselben zu erhalten. Mit anderen Worten wird die Oberfläche des Innenraums bezüglich Lage und Gestalt optisch gescannt/geortet/lokalisiert oder die Anwenderschnittstelle entsprechend kalibriert, um eine dreidimensionale Navigationskarte zu laden und datentechnisch an die Oberfläche anzupassen. Über den Datenausgang kann die angepasste dreidimensionale Navigationskarte nebst einer Repräsentation einer Ego-Position des Fortbewegungsmittels als virtuelles, erhabenes Modell auf der Oberfläche mittels einer AR-Anzeigeeinrichtung dargestellt werden. Die AR-Anzeigeeinrichtung kann einen transparenten Bildschirm aufweisen, welcher Bestandteil der Anwenderschnittstelle ist oder über den Datenausgang informationstechnisch mit dieser verknüpft ist. Mit anderen Worten ist die Anwenderschnittstelle eingerichtet, die Merkmale, Merkmalskombinationen und die sich aus diesen ergebenden Vorteile des erfindungsgemäßen Verfahrens derart ersichtlich in entsprechender Weise zu verwirklichen, dass zur Vermeidung von Wiederholungen auf den erstgenannten Erfindungsaspekt verwiesen wird.

Gemäß einem dritten Aspekt der vorliegenden Erfindung wird ein Fortbewegungsmittel vorgeschlagen, welches beispielsweise als Pkw, Transporter, Lkw, Motorrad, Luft- und/oder Wasserfahrzeug ausgestaltet sein kann. Das Fortbewegungsmittel weist eine Anwenderschnittstelle gemäß dem zweitgenannten Erfindungsaspekt auf und ist daher im Stande, mit denselben Merkmalen, Merkmalskombinationen und Vorteilen ein Navigationsvorhaben eines Anwenders des Fortbewegungsmittels zu unterstützen.

Im Folgenden wird die Erfindung anhand von Ausführungsbeispielen genauer erläutert. Es zeigen:
- Figur 1: eine perspektivische Darstellung eines Beifahrerarbeitsplatzes eines Ausführungsbeispiels eines erfindungsgemäß ausgestalteten Fortbewegungsmittels, in welchem ein Anwender mit einem Ausführungsbeispiel einer Anwenderschnittstelle ein Ausführungsbeispiel eines erfindungsgemäßen Verfahrens ausführt;
- Figur 2: eine perspektivische Darstellung eines Beifahrerarbeitsplatzes aus Sicht eines Beifahrers als Insasse in einem ersten Betriebszustand;
- Figur 3: eine perspektivische Darstellung eines Beifahrerarbeitsplatzes aus Sicht eines Beifahrers als Insasse in einem zweiten Betriebszustand;
- Figur 4: eine perspektivische Darstellung eines Beifahrerarbeitsplatzes aus Sicht eines Beifahrers als Insasse in einem dritten Betriebszustand; und
- Figur 5: ein Flussdiagramm veranschaulichend Schritte eines Ausführungsbeispiels eines erfindungsgemäßen Verfahrens zur Anzeige einer virtuellen dreidimensionalen Navigationskarte in einem Fortbewegungsmittel.

### Ausführungsformen der Erfindung

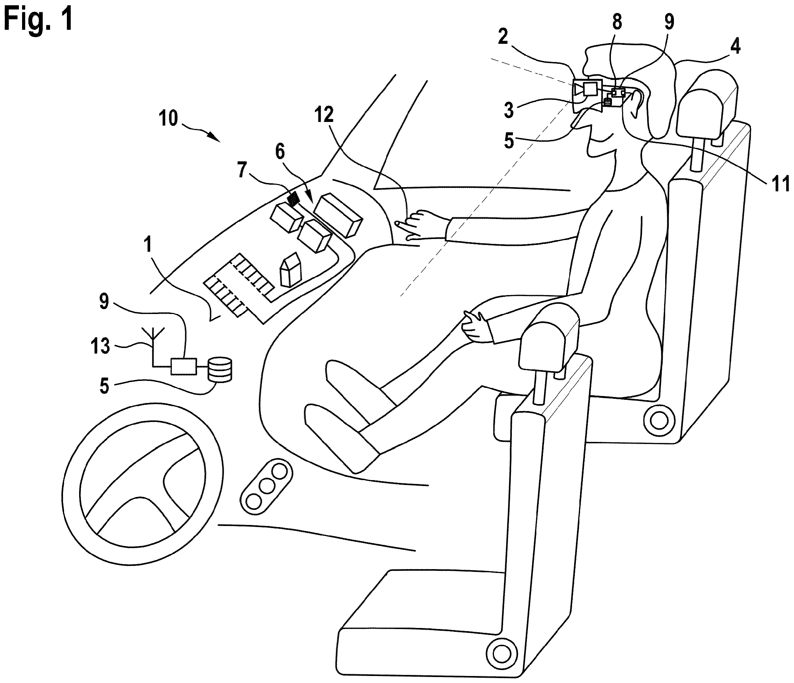

Figur 1 zeigt einen Fahrerarbeitsplatz eines erfindungsgemäß ausgestalteten Fortbewegungsmittels 10 in Form eines Pkws, auf dessen Beifahrersitz ein Insasse 4 in Form eines Beifahrers Platz genommen hat. Der Insasse 4 trägt eine AR-Anzeigeeinrichtung 2, welche einen im Wesentlichen in Blickrichtung ausgerichteten optischen Sensor 3 in Form einer 2D-Kamera aufweist. Der optische Sensor 3 ist informationstechnisch mit dem Dateneingang 8 eines elektronischen Steuergerätes 9 verbunden. Über den Dateneingang 8 ist auch ein in der AR-Anzeigeeinrichtung 2 befindlicher Datenspeicher 5 informationstechnisch angeschlossen. Über einen Datenausgang 11 kann mittels des elektronischen Steuergerätes 9 ermitteltes Bildmaterial auf der AR-Anzeigeeinrichtung 2 angezeigt werden. Mittels des optischen Sensors 3 wird von einem Steuergerät 9 des Fortbewegungsmittels über eine Antenne 13 des Fortbewegungsmittels gesendetes dreidimensionales Navigationskartenmaterial an die AR-Anzeigeeinrichtung 2 gesendet und derart virtuell auf dem Armaturenbrett 1 des Fortbewegungsmittels 10 verortet, dass sich eine der gewölbten Oberfläche des Armaturenbrettes 1 angepasste Darstellung eines 3D-Kartenmodells in Form einer angepassten dreidimensionalen Navigationskarte 6 ergibt. Innerhalb der angepassten dreidimensionalen Navigationskarte 6 ist eine Repräsentation 7 einer Ego-Position des Fortbewegungsmittels 10 dargestellt. Im Erfassungsbereich des optischen Sensors 3 ist insbesondere eine Gliedmaße 12 des Insassen 4 in Form einer Hand erfasst worden. Der Insasse 4 zeigt auf eine Repräsentation eines Gebäudes innerhalb der angepassten dreidimensionalen Navigationskarte 6. Im Ansprechen auf eine Bestätigung oder einen Ablauf einer vordefinierten Zeitdauer wird mittels der Augmented-Reality-Anzeigeeinrichtung 2 eine Information bezüglich des Gebäudes kontaktanalog zur Repräsentation des Gebäudes dargestellt (nicht gezeigt).

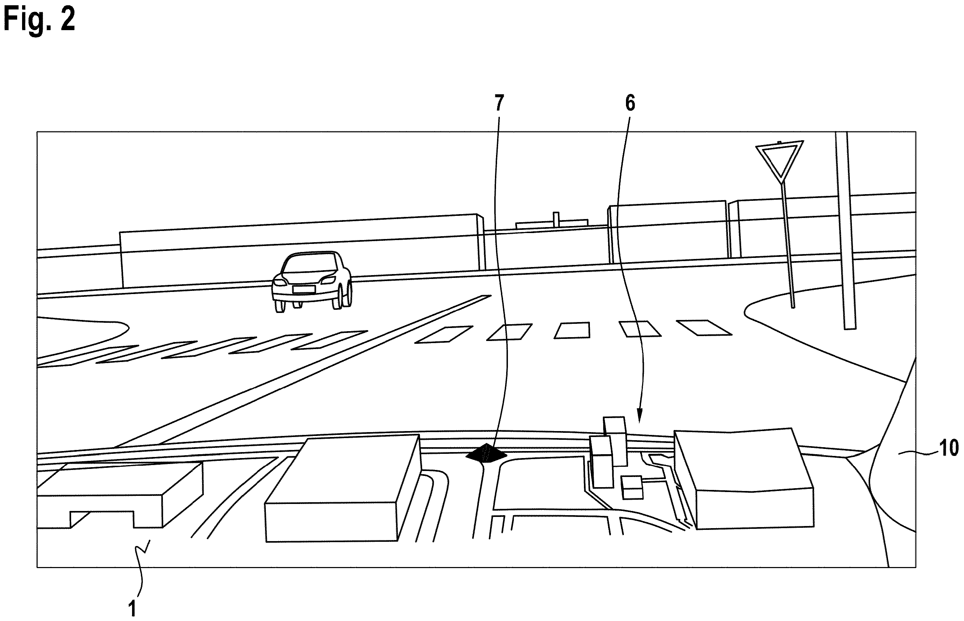

Figur 2 zeigt die Sicht des Insassen (Bezugszeichen 4 in Figur 1) während der Annäherung an eine T-Kreuzung. Die Ego-Position des Fortbewegungsmittels 10 ist in der angepassten dreidimensionalen Navigationskarte 6 durch eine Repräsentation 7 markiert.

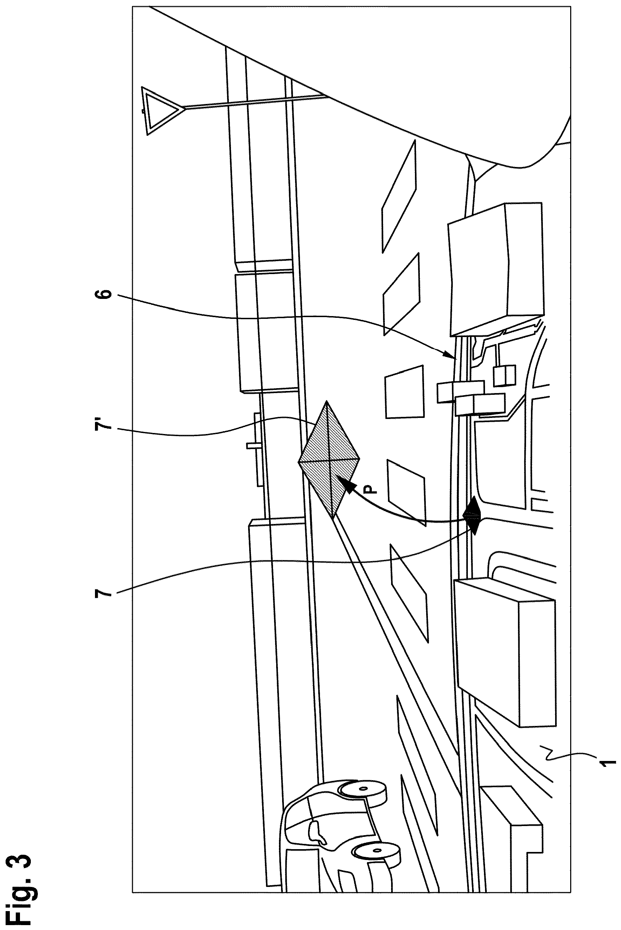

Figur 3 zeigt die in Figur 2 dargestellte Situation nach einer weiteren Annäherung des Fortbewegungsmittels 10 an die T-Kreuzung. Wie durch einen Pfeil P veranschaulicht, ist eine modifizierte Repräsentation 7` des Fortbewegungsmittels 10 als zukünftige Ego-Position des Fortbewegungsmittels 10 in die (reale) Umgebung des Ego-Fortbewegungsmittels 10 übergegangen. Die modifizierte Repräsentation 7` "fliegt" nun virtuell dem Fortbewegungsmittel 10 voraus und verändert hierbei Größe und Formgebung.

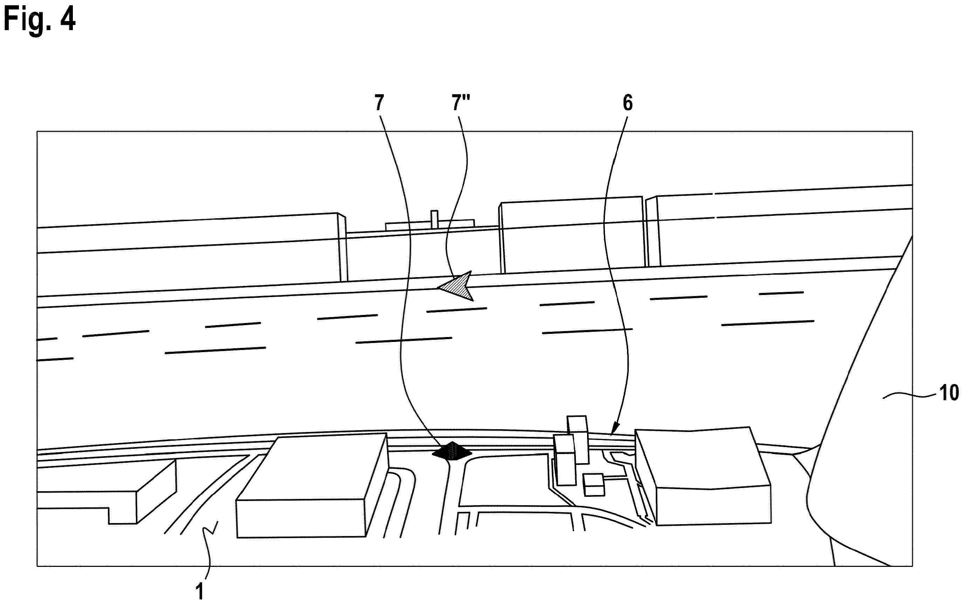

Figur 4 zeigt die in Figur 3 dargestellte Situation, nachdem die modifizierte Repräsentation 7' eine vordefinierte Abbiegeposition "erreicht" hat. An dieser Position wird eine abermals modifizierte Repräsentation 7" in Form einer Pfeilspitze dargestellt, welche das Linksabbiegemanöver für den Fahrer des Fortbewegungsmittels 10 an der vordefinierten Position in der Umgebung ankündigt. Bei einem manuellen Fahrmodus bzw. einem manuell geführten Fortbewegungsmittel 10 hat der Anwender nun die Geschwindigkeit zu reduzieren und einen Lenkeinschlag nach links vorzunehmen. Bei einem autonom fahrenden Fortbewegungsmittel 10 wird der Anwender lediglich darauf hingewiesen, dass das Fortbewegungsmittel 10 nun abbremsen und nach links abbiegen wird. Beim autonom fahrenden Fortbewegungsmittel 10 wird hierdurch einer Kinetose wirksam vorgebeugt, da der Anwender sich auf die zu erwartenden Kräfte einstellen kann.

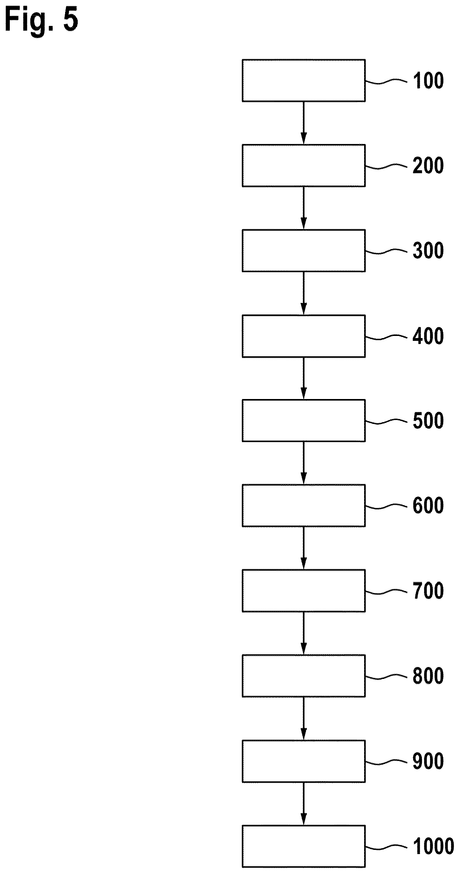

Figur 5 zeigt Schritte eines Ausführungsbeispiels eines erfindungsgemäßen Verfahrens zur Anzeige einer virtuellen dreidimensionalen Navigationskarte in einem Fortbewegungsmittel. In Schritt 100 wird eine Augmented-Reality (AR)-Anzeigeeinrichtung informationstechnisch mit dem Fortbewegungsmittel verbunden. Hierbei wird eine Drahtloskommunikationsverbindung zwischen der AR-Anzeigeeinrichtung und dem Fortbewegungsmittel aufgebaut. In Schritt 200 wird eine Oberfläche eines Innenraums des Fortbewegungsmittels mittels eines optischen Sensors der AR-Anzeigeeinrichtung optisch abgetastet. Hierbei erstellt die AR-Anzeigeeinrichtung ein Oberflächenmodell des Innenraums des Fortbewegungsmittels. In Schritt 300 wird eine dreidimensionale Navigationskarte aus einem Datenspeicher geladen. In Schritt 400 wird die geladene dreidimensionale Navigationskarte entsprechend dem Ergebnis der Abtastung an die Oberfläche des Fortbewegungsmittels angepasst. Hierbei wird eine Wölbung der dreidimensionalen Navigationskarte erzeugt, um eine vollflächige virtuelle Korrespondenz der dreidimensionalen Navigationskarte mit der Oberfläche des Innenraums zu erzielen. In Schritt 500 wird die angepasste dreidimensionale Navigationskarte nebst einer Repräsentation einer Ego-Position des Fortbewegungsmittels als virtuelles, erhabenes Modell auf der Oberfläche des Fortbewegungsmittels mittels einer Augmented-Reality (AR)-Anzeigeeinrichtung dargestellt. Hierdurch wird eine große und perspektivisch realitätsnahe Darstellung der Fahrzeugumgebung erzeugt und zur Veranschaulichung des Navigationsvorhabens verwendet. In Schritt 600 wird anschließend eine Modifikation einer optischen Erscheinung des Fortbewegungsmittels im Bereich der Oberfläche ermittelt. Beispielsweise kann das Fortbewegungsmittel melden, dass eine Anzeige in einem Scheibenwurzeldisplay eine Überlagerung mit Inhalten der angepassten dreidimensionalen Navigationskarte bedingen könnte. In Schritt 700 wird daher eine Verschiebung der angepassten dreidimensionalen Navigationskarte vorgenommen, um den im Scheibenwurzeldisplay angezeigten Inhalt ohne Überlagerung durch Inhalte der AR-Anzeigeeinrichtung anzeigen zu können. In Schritt 800 wird automatisch ein dem Fortbewegungsmittel bevorstehendes Manöver ermittelt. Um dem Anwender den Bezug zur Umgebungsposition des Manövers so leicht wie möglich zu machen, wird in Schritt 900 eine Repräsentation der Ego-Position aus der angepassten dreidimensionalen Navigationskarte zunächst kopiert und anschließend herausgelöst. In Schritt 1000 wird die herausgelöste Repräsentation der Ego-Position einem Detail der Umgebung des Fortbewegungsmittels kontaktanalog überlagert, sodass der Anwender die herausgelöste Repräsentation unmittelbar als diejenige Umgebungsposition erkennen kann, an welcher das bevorstehende Manöver ausgeführt werden soll.

### Bezugszeichenliste

- 1: Armaturenbrett
- 2: Augmented-Reality (AR)-Anzeigeeinrichtung
- 3: optischer Sensor
- 4: Insasse
- 5: Datenspeicher
- 6: angepasste dreidimensionale Navigationskarte
- 7: Repräsentation der Ego-Position
- 7`: modifizierte Repräsentation der Ego-Position
- 7": abermals modifizierte Repräsentation der Ego-Position
- 8: Dateneingang
- 9: elektronisches Steuergerät
- 10: Fortbewegungsmittel
- 11: Datenausgang
- 12: Gliedmaße des Anwenders
- 13: Antenne
- 100 bis 1000: Verfahrensschritte

## Patentansprüche

1. Verfahren zur Anzeige einer virtuellen dreidimensionalen Navigationskarte in einem Fortbewegungsmittel (10) umfassend die Schritte:
• Laden (300) der dreidimensionalen Navigationskarte,
• automatisches Anpassen (400) der dreidimensionalen Navigationskarte an eine Oberfläche (1) eines Innenraumes des Fortbewegungsmittels (10) und
• Darstellen (500) der angepassten dreidimensionalen Navigationskarte (6) nebst einer Repräsentation einer Ego-Position des Fortbewegungsmittels (10) als virtuelles, erhabenes Modell auf der Oberfläche (1) mittels einer Augmented-Reality-Anzeigeeinrichtung (2).

2. Verfahren nach Anspruch 1, wobei die Oberfläche (1) eine Armaturentafel und/oder ein Armaturenbrett umfasst.

3. Verfahren nach Anspruch 1 oder 2, wobei die Augmented-Reality-Anzeigeeinrichtung (2) einen am Kopf eines Insassen (4) befestigten Bildschirm umfasst.

4. Verfahren nach einem der vorstehenden Ansprüche, wobei die dreidimensionale Navigationskarte aus einem Datenspeicher (5) des Fortbewegungsmittels (10) geladen wird.

5. Verfahren nach einem der vorstehenden Ansprüche weiter umfassend
- informationstechnisches Verbinden (100) der Augmented-Reality-Anzeigeeinrichtung (2) mit dem Fortbewegungsmittel (10) mittels eines Kabels und/oder drahtlos.

6. Verfahren nach einem der vorstehenden Ansprüche weiter umfassend
- Ermitteln (600) einer Modifikation einer optischen Erscheinung des Fortbewegungsmittels (10) im Bereich der Oberfläche (1) und
- Anpassen (700) der angepassten dreidimensionalen Navigationskarte (6) und/oder ihrer Darstellung mittels der Augmented-Reality-Anzeigeeinrichtung (2).

7. Verfahren nach einem der vorstehenden Ansprüche weiter umfassend die Schritte:
- automatisches Ermitteln (800) eines dem Fortbewegungsmittel (10) bevorstehenden Manövers und im Ansprechen darauf
- automatisches Herauslösen (900) der Repräsentation (7`) der Ego-Position aus der angepassten dreidimensionalen Navigationskarte (6) und
- Überlagern (1000) eines Details einer Umgebung des Fortbewegungsmittels (10) durch die Repräsentation (7) der Ego Position mittels der Augmented-Reality-Anzeigeeinrichtung (2).

8. Verfahren nach einem der vorstehenden Ansprüche weiter umfassend die Schritte:
- Optisches sensortechnisches Abtasten (200) der Oberfläche (1) eines Innenraumes des Fortbewegungsmittels (10), insbesondere mittels eines optischen Sensors (3) der Anzeigeeinrichtung (2), und/oder
- Laden einer datentechnischen Repräsentation der Oberfläche (1).

9. Anwenderschnittstelle zur Anzeige einer virtuellen dreidimensionalen Navigationskarte in einem Fortbewegungsmittel (10) umfassend:
• einen Dateneingang (8),
• eine Auswerteeinheit (9) und
• einen Datenausgang (11),
wobei die Anwenderschnittstelle eingerichtet ist,
• mittels des Dateneingangs (8)
o eine Repräsentation einer Oberfläche (1) eines Innenraumes des Fortbewegungsmittels (10) zu ermitteln und
o die dreidimensionale Navigationskarte zu laden, und weiter eingerichtet ist,
• die dreidimensionale Navigationskarte an die Oberfläche (1) anzupassen und
• mittels des Datenausgangs (11) die angepasste dreidimensionale Navigationskarte (6) nebst einer Repräsentation (7) einer Ego-Position des Fortbewegungsmittels (10) als virtuelles, erhabenes Modell auf der Oberfläche (1) mittels einer Augmented-Reality-Anzeigeeinrichtung (2) darzustellen.

10. Fortbewegungsmittel umfassend eine Anwenderschnittstelle nach Anspruch 9.

## Claims

1. Method for displaying a virtual three-dimensional navigation map in a means of transport (10) comprising the steps of:
• loading (300) the three-dimensional navigation map,
• automatically adjusting (400) the three-dimensional navigation map to a surface (1) of an interior of the means of transport (10) and
• displaying (500) the adjusted three-dimensional navigation map (6) along with a representation of an ego position of the means of transport (10) as a virtual, raised model on the surface (1) by means of an augmented reality display device (2).

2. Method according to claim 1, wherein the surface (1) comprises an instrument panel and/or a dashboard.

3. Method according to either claim 1 or claim 2, wherein the augmented reality display device (2) comprises a screen attached to the head of an occupant (4).

4. Method according to any of the preceding claims, wherein the three-dimensional navigation map is loaded from a data memory (5) of the means of transport (10).

5. Method according to any of the preceding claims, further comprising
- connecting (100), in terms of information technology, the augmented reality display device (2) to the means of transport (10) by means of a cable and/or wirelessly.

6. Method according to any of the preceding claims, further comprising
- determining (600) a modification of an optical appearance of the means of transport (10) in the region of the surface (1) and
- adjusting (700) the adjusted three-dimensional navigation map (6) and/or the display thereof by means of the augmented reality display device (2).

7. Method according to any of the preceding claims, further comprising the following steps:
- automatically determining (800) an impending maneuver of the means of transport (10) and in response thereto
- automatically extracting (900) the representation (7') of the ego position from the adjusted three-dimensional navigation map (6) and
- superimposing (1000) the representation (7) of the ego position on a detail of an environment of the means of transport (10) by means of the augmented reality display device (2).

8. Method according to any of the preceding claims, further comprising the following steps:
- optically scanning (200), using a sensor, the surface (1) of an interior of the means of transport (10), in particular by means of an optical sensor (3) of the display device (2), and/or
- loading a data-technical representation of the surface (1).

9. User interface for displaying a virtual three-dimensional navigation map in a means of transport (10), comprising:
• a data input (8),
• an evaluation unit (9) and
• a data output (11),
wherein the user interface is configured,
• by means of the data input (8),
∘ to determine a representation of a surface (1) of an interior of the means of transport (10) and
∘ to load the three-dimensional navigation map, and is further configured,
• to adjust the three-dimensional navigation map to the surface (1) and
• by means of the data output (11), to display the adjusted three-dimensional navigation map (6) along with a representation (7) of an ego position of the means of transport (10) as a virtual, raised model on the surface (1) by means of an augmented reality display device (2).

10. Means of transport comprising a user interface according to claim 9.

## Revendications

1. Procédé pour l'affichage d'une carte de navigation tridimensionnelle virtuelle dans un moyen de locomotion (10), comprenant les étapes consistant à :
• charger (300) la carte de navigation tridimensionnelle,
• adapter (400) automatiquement la carte de navigation tridimensionnelle à une surface (1) d'un espace intérieur du moyen de locomotion (10), et
• présenter (500) la carte de navigation tridimensionnelle adaptée (6) ainsi qu'une représentation d'une égo-position du moyen de locomotion (10) sous forme de modèle virtuel en relief sur la surface (1) au moyen d'un dispositif d'affichage (2) à réalité augmentée.

2. Procédé selon la revendication 1, dans lequel la surface (1) comprend un pupitre de conduite et/ou un tableau de bord.

3. Procédé selon la revendication 1 ou 2, dans lequel le dispositif d'affichage (2) à réalité augmentée comprend un écran fixé sur la tête d'un passager (4).

4. Procédé selon l'une des revendications précédentes, dans lequel la carte de navigation tridimensionnelle est chargée à partir d'une mémoire de données (5) du moyen de locomotion (10).

5. Procédé selon l'une des revendications précédentes, comprenant en outre
- la connexion (100) par la technique de l'information du dispositif d'affichage (2) à réalité augmentée au moyen de locomotion (10) au moyen d'un câble et/ou sans fil.

6. Procédé selon l'une des revendications précédentes, comprenant en outre
- la détermination (600) d'une modification d'une apparence optique du moyen de locomotion (10) dans la zone de la surface (1), et
- l'adaptation (700) de la carte de navigation tridimensionnelle adaptée (6) et/ou de sa présentation au moyen du dispositif d'affichage (2) à réalité augmentée.

7. Procédé selon l'une des revendications précédentes, comprenant en outre les étapes consistant à :
- détecter (800) automatiquement une manoeuvre imminente du moyen de locomotion (10) et, en réponse à celle-ci,
- enlever (900) automatiquement la représentation (7') de l'égo-position de la carte de navigation tridimensionnelle adaptée (6), et
- superposer (1000) un détail d'un environnement du moyen de locomotion (10) par la représentation (7) de l'égo-position au moyen du dispositif d'affichage (2) à réalité augmentée.

8. Procédé selon l'une des revendications précédentes, comprenant en outre les étapes consistant à :
- balayer (200), de manière optique en termes de technologie de capteur, la surface (1) d'un espace intérieur du moyen de locomotion (10), en particulier au moyen d'un capteur optique (3) du dispositif d'affichage (2), et/ou
- charger une représentation par technique de données de la surface (1).

9. Interface utilisateur pour l'affichage d'une carte de navigation tridimensionnelle virtuelle dans un moyen de locomotion (10), comprenant :
• une entrée de données (8),
• une unité d'évaluation (9), et
• une sortie de données (11),
dans laquelle l'interface utilisateur est configurée pour
• au moyen de l'entrée de données (8)
∘ déterminer une représentation d'une surface (1) d'un espace intérieur du moyen de locomotion (10), et
∘ charger la carte de navigation tridimensionnelle, et est en outre configurée pour
• adapter la carte de navigation tridimensionnelle à la surface (1), et
• présenter, au moyen de la sortie de données (11), la carte de navigation tridimensionnelle adaptée (6) ainsi qu'une représentation (7) d'une égo-position du moyen de locomotion (10) sous forme de modèle virtuel en relief sur la surface (1) au moyen d'un dispositif d'affichage (2) à réalité augmentée.

10. Moyen de locomotion comprenant une interface utilisateur selon la revendication 9.
